# EUROPEAN PATENT SPECIFICATION

(11) **EP 1 467 952 B1**
(45) Date of publication and mention of the grant of the patent: **08.05.2013**
(21) Application number: 01979104.5
(22) Date of filing: 08.10.2001
(51) Int. Cl.: C02F 9/00

(54) **METHOD FOR PURIFYING WATER AND DISPENSING PURIFIED WATER**
VERFAHREN ZUR REINIGUNG VON WASSER UND ZUR ABGABE VON GEREINIGTEM WASSER
PROCEDE DE PURIFICATION DE L'EAU ET DISTRIBUTION D'EAU PURIFIEE

(43) Date of publication of application: 20.10.2004
(73) Proprietor: Heyning, Hendrik Willem Lambertus, 2245 BZ Wassenaar (NL)
(72) Inventor: Heyning, Hendrik Willem Lambertus, 2245 BZ Wassenaar (NL)
(74) Representative: Vernout, Robert
(86) International application number: PCT/NL2001/000738
(87) International publication number: WO 2003/031351

(56) References cited:
- WO-A-00/14464
- WO-A-01/28937
- WO-A-98/12489
- DE-A- 4 007 351
- US-A- 5 032 290
- US-A- 5 817 231
- US-A- 5 868 924
- US-A- 5 988 435
- US-A- 6 015 486
- US-A- 6 101 452
- PATENT ABSTRACTS OF JAPAN vol. 1996, no. 11, 29 November 1996 (1996-11-29) -& JP 08 175599 A (NIPPON KOKA COLA KK;HAYAKAWA SANKI KK), 9 July 1996 (1996-07-09)
- PATENT ABSTRACTS OF JAPAN vol. 1999, no. 09, 30 July 1999 (1999-07-30) -& JP 11 104619 A (SANDEN CORP), 20 April 1999 (1999-04-20) -& DATABASE WPI Week 199926, 20 April 1999 (1999-04-20) Derwent Publications Ltd., London, GB; AN 1999-306491 XP002170153
- PATENT ABSTRACTS OF JAPAN vol. 1999, no. 02, 26 February 1999 (1999-02-26) & JP 10 292444 A (SHIMIZU CORP), 4 November 1998 (1998-11-04)

## Description

The invention relates to a method for purifying water and dispensing purified water, in which a system is used, which comprises one or more purification units in which water that is supplied thereto is treated. Such a system is described in JP 10-292444, WO 0014464, WO 01/28937, US5032290, and US6015486.

Such a system may be present in a shop, where consumers do their shopping. Purified water can be sold in containers that have been filled elsewhere, but it is also possible to sell the water in "unpackaged" condition, that is, a dispensing unit for dispensing purified water is present in the shop, by means of which dispensing unit the consumer can fill a container himself. Said container can be brought to the shop by the consumer, but the container may also be sold at the shop.

Such a system includes a number of purification units, which treat the water in succession so as to purify water being supplied, for example tap water being supplied by a utility company. A number of the usual purification units together may be rather voluminous and, in addition, it is not unusual for a large water tank to be present for temporary storage of purified water.

The consequence of this may be that relatively much space must be available at the place where the water is being dispensed in shop. Consequently, such a system cannot be present in any shop, and certainly not at any place in the shop.

The object of the invention is to provide a method for dispensing purified water which makes it possible to dispense purified water at practically any location.

This object is achieved by a method in accordance with claim 1.

By positioning that part of the system where the water is purified (the main unit), or where said purification takes place for the most part, at a location physically remote from the part of the system where the purified water is dispensed (the dispensing units), only a limited amount of space is required at the location where the purified water is dispensed, in spite of the fact that the system comprises a relatively voluminous apparatus. In that case it is possible to dispose the main unit, which comprises the larger part of the system, at a location where sufficient space is available, for example in a cellar or at another location which is not or which cannot be used otherwise.

Preferably, a purification unit comprises a mechanical filter and/or an active carbon filter and/or an ion exchanger and/or a UV sterilizer and/or a reverse osmosis membrane, and said units are for the main part housed in said main unit.

Preferably, the dispensing units and the main unit are disposed more than 8 metres apart, more preferably more than 40 metres. In practice, said distance can amount to more than 80 metres, the larger distance between the main unit and the dispensing units makes it possible to use the most suitable place for the units.

In one preferred embodiment, the main unit comprises a reverse osmosis membrane and/or a mechanical filter and/or an active carbon filter and/or a storage tank for the temporary storage of purified water.

Preferably, the dispensing units are arranged for filling a closable container with dispensed liquid and/or for filling a cup with dispensed liquid. The fact that the consumer is able to taste the water with which he is filling his container by filling a cup with said water is advantageous. It is especially advantageous if the consumer can see that he is actually tasting the same water that he is filling his container with, and this can be achieved if a water tank having an at least partially transparent wall is present in the dispensing units, with the consumer actually seeing the water level in the tank drop both upon filling his cup and upon filling his container.

Two dispensing units can be spaced apart by more than 5 metres, preferably more than 10 metres, so that they can be disposed at any place in the shop.

In one preferred embodiment, the main unit and/or the dispensing units comprise means for adding carbonic acid gas to the water to be dispensed. Furthermore it is possible to add minerals and/or one or more flavourings.

Preferably, the main unit and/or the dispensing unit comprise means for cooling the water to be dispensed or means for heating the water to be dispensed, so that the water can be used to make coffee or tea, for example.

In one preferred embodiment, for each dispersing unit, a pipe which carries water from the main unit to the dispensing unit is present between the main unit and the dispensing unit, as is a circulation pipe which carries water from the dispensing unit to the main unit. Said embodiment may include means for effecting a temporary or continuous flow of purified water from the dispensing unit to the main unit, so that the water is circulated. During said circulation, the water being circulated can be further purified or be purified anew, for example by passing it through a UV sterilizer. Permanent or temporary circulation of the water makes it possible to maintain or helps to maintain the bacteriological stability in the piping by means of the UV sterilizer.

The term water as used in the foregoing may also refer to a liquid which mainly contains water, such as water containing minerals and/or flavourings and the like that have been added thereto.

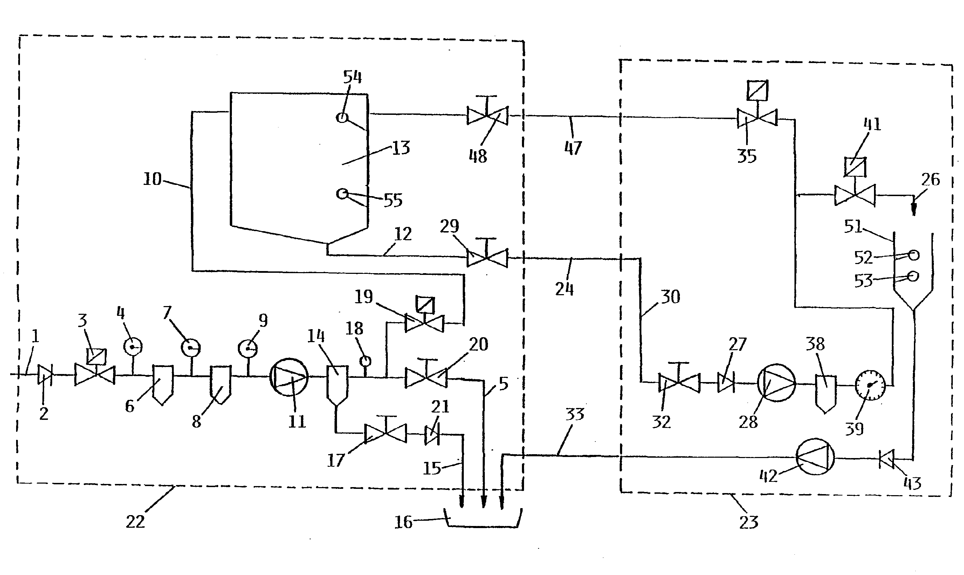

In order to explain the invention more fully, an exemplary embodiment of an apparatus for purifying water will now be described with reference to the drawing.

The figure is merely a schematic representation of a system used in a method according to the invention. Several dispersing units one connected to the main unit. However a single dispersing unit is described in the figure and below.

In the apparatus that is shown in the figure, water is supplied via pipe 1, non-return valve 2 and magnetic valve 3, which can be operated by remote control. Manometer 4 measures the supply pressure of the water. Floating particles are removed from the water being supplied in a sediment filter 6. The water that is supplied is normal drinking water, for example, such as the water that is available as tap water.

The water then passes an active carbon filter 8, where chemical contaminants are removed from the water. Manometer 7 measures the liquid pressure after sediment filter 6, and it is possible to determine whether filter 6 is fouled or is otherwise not functioning properly by comparing said pressure with the pressure as measured by manometer 4. Similarly, the functioning of active carbon filter 8 can be checked on the basis of the measurements by manometers 7 and 9 before and after the filter 8.

High-pressure water pump 11 subsequently forces the pre-filtered water through an osmosis membrane 14. The reverse osmosis membrane 14 is of a usual type. The pump 11 can force the water to filter 14 at a pressure of 7 - 11 bar in an amount of, for example, 900 litres per hour.

In the reverse osmosis membrane 14, the water to be treated is introduced into a concentrate chamber on the outside of the membrane. The inside of the membrane communicates with a permeate water pipe 10 for carrying the water that has been purified to the storage tank 13 when valve 19 is open. A water conductivity cell 18 is disposed in the pipe from filter 14 to storage tank 13 for the purpose of checking whether the permeate has been cleared of dissolved minerals to a sufficient extent. Based on the measurements of water conductivity cell 18, the valves 19 and 20 are operated. If and as long as the measured conductivity of the permeate lies below a specific value, the valve 19 will be opened and valve 20 is closed after a few seconds, so that the permeate can flow to storage tank 13 via pipe 10. As long as the conductivity of the permeate remains too high, the valve 19 will remain closed and the water will flow to the sewer 16 via the valve 20, which will be open in that situation, and pipe 5.

The brine present on the outside of the membrane of filter 14, which contains an elevated amount of dissolved minerals, bacteria and other organic matter and chemical contaminations, is discharged to the sewer 15 via valve 17, non-return valve 21 and pipe 15.

Storage tank 13, which may contain 100 litres of permeate, for example, includes an upper float 54, which is capable of shutting off the supply of permeate when the level rises too high. Furthermore, a float 55 is provided, which activates the pump 11 when the water level in storage tank 13 is low, so that new permeate can be carried to storage tank 13 via valve 19 and pipe 10.

The parts of the apparatus for purifying water that have been described so far are housed in a main unit 22, which is indicated by a dashed line. Said main unit 22 comprises relatively large pieces of equipment, such as the storage tank 13 and the various purification units 6, 8, 14. The water, which has undergone a number of purification treatments in the main unit 22, can leave the main unit 22 via pipe 12 and valve 29.

A dispensing unit 23, likewise indicated by a dashed line, is disposed some distance away from the main unit 22. A supply pipe 24 extends between the main unit 22 and the dispensing unit 23 for transporting water that is supplied via pipe 12, which water has undergone a number of purification treatments, to the dispensing unit 23.

In the dispensing unit 23, the supply pipe 24 connects to pipe 30, which interconnects, in succession, a valve 32, a non-return valve 27, a metering pump 28, a purification unit 38 and a flow meter 39. Purification unit 38 consists of a combination of an ultraviolet (UV) sterilizer and an active carbon filter. The UV sterilizer comprises an ultraviolet lamp, which radiates through a transparent water section with sufficient light to kill all, or practically all, bacteria, viruses and other micro-organisms that may still be present in the permeate water from the storage tank 13 before said water is dispensed as purified water via a tap 26 that is to be operated by the consumer. The valve 41 is temporarily opened to that end.

Before the water is dispensed, the amount of flowing water is measured by flow meter 39, so that a predetermined amount of water can be dispensed. Valve 41 is operated in dependence on the amount of water measured by flow meter 39, so that an predetermined amount of water or an amount of water set by the consumer is dispensed, or water is dispensed as long as an appropriate button is held by the consumer.

Water that is spilt during said tapping is caught in reservoir 51 and drained into the sewer 16 via non-return valve 43, pump 42 and drain pipe 33. To that end, reservoir 51 is provided with an upper float 52 and a lower float 53, which ensure that the level of the water in reservoir 51 will remain between predetermined values at all times. If the level rises too high, float 52 will activate pump 42, and if the level sinks too low as a result thereof, float 53 will turn pump 42 off.

If no water, or insufficient water, has been tapped for a specific period of time, valve 35 will be opened, as a result of which the water will circulate in that it will flow back to the storage tank 13 via circulation pipe 47 and valve 48. This may take place every six hours, for example, and that for 20 minutes, for example, so that the entire contents of the storage tank 13 are circulated four times a day, during which circulation it passes the purification unit 38.

Furthermore, the necessary control means are present, which control means are not shown in the schematic figure.

The apparatus consists of the main unit 22 and the dispensing units 23. Besides lines and connections that are necessary for controlling the apparatus, three pipes are present, a supply pipe 31, a drain pipe 33 and a circulation pipe 47. Said pipes may be long, even more than 80 metres. This makes it possible to dispose the main unit 22, which is relatively large, at a suitable location, where a great deal of space is available, and the dispensing units 23, being relatively small, at practically any desired location.

## Claims

1. A method for dispensing purified water in a shop wherein consumers fill their containers with said water from a dispensing unit, wherein tap water delivered by a utility company is treated in a main unit (22) present in said shop by means of one or more purification units (6, 8, 14, 38) before being dispensed, wherein several dispensing units (23) are connected to said main unit (22), wherein said dispensing units (23), and the main unit (22) are disposed at least 3 metres apart and two of said dispensing units are spaced apart by more than 2 metres, **characterized in that** the dispensing units (23) each comprise a UV sterilizer (38).

2. A method according to claim 1, **characterized in that** a purification unit (6, 8, 14, 38) comprises a mechanical filter and/or an active carbon filter and/or an ion exchanger and/or a UV sterilizer and/or a reverse osmosis membrane.

3. A method according to any one of the preceding claims, **characterized in that** the said dispensing units (23) and the main unit (22) are disposed at least 8 metres apart, more preferably more than 40 metres.

4. A method according to any one of the preceding claims, **characterized in that** the main unit (22) comprises a reverse osmosis membrane (14) and/or a mechanical filter (6) and/or an active carbon filter (8).

5. A method according to any one of the preceding claims, **characterized in that** the main unit (22) comprises a storage tank (13) for the temporary storage of purified
water.

6. A method according to any one of the preceding claims, **characterized in that** the dispensing units (23) are arranged for filling a closable container with dispensed liquid.

7. A method according to any one of the preceding claims, **characterized in that** the dispensing units (23) are arranged for filling a cup with dispensed liquid.

8. A method according to any one of the preceding claims, **characterized in that** the dispensing units (23) are arranged for filling a cup as well as a closable container with dispensed liquid.

9. A method according to any one of the preceding claims, **characterized in that** the dispensing units (23) comprise a water storage tank having an at least partially transparent wall.

10. A method according to any one of the previous claims, **characterized in that** two dispensing units (23) are spaced apart by more than 5 metres, more preferably more than 10 metres.

11. A method according to any one of the preceding claims, **characterized in that** the main unit (22) and/or the dispensing units (23) comprise means for adding carbonic acid gas to the liquid to be dispensed.

12. A method according to any one of the preceding claims, **characterized in that** the main unit (22) and/or the dispensing units (23) comprise means for adding minerals and/or a flavouring to the liquid to be dispensed.

13. A method according to any one of the preceding claims, **characterized in that** the main unit (22) and/or the dispensing units (23) comprise means for cooling the liquid to be dispensed.

14. A method according to any one of the preceding claims, **characterized in that** the main unit (22) and/or the dispensing units (23) comprise means for heating the liquid to be dispensed.

15. A method according to any one of the preceding claims, **characterized in that** for each dispensing unit (23) a pipe (24) which carries water from the main unit (22) to the dispensing unit (23) is present between the main unit (22) and the dispensing unit (23), as is a circulation pipe (47) which carries water from the dispensing unit (23) to the main unit (22).

16. A method according to claim 15, **characterized in that** means are present for effecting a temporary or continuous flow of purified water from the dispensing units (23) to the main unit (22) through the circulation pipe (47), so that the water is circulated.

## Patentansprüche

1. Verfahren zum Abgeben von gereinigtem Wasser in einem Geschäft, wobei Verbraucher ihre Behälter mit dem genannten Wasser von einer Abgabeeinheit füllen, wobei Leitungswasser, das von einem Versorgungsunternehmen geliefert wird, in einer Haupteinheit (22), die in dem genannten Geschäft vorhanden ist, mittels einer oder mehrerer Reinigungseinheiten (6, 8, 14, 38) behandelt wird, bevor es abgegeben wird, wobei mehrere Abgabeeinheiten (23) mit der genannten Haupteinheit (22) verbunden sind, wobei die genannten Abgabeeinheiten (23) und die Haupteinheit (23) zumindest 3 m voneinander entfernt angeordnet sind und zwei der genannten Abgabeeinheiten mehr als 2 m voneinander entfernt angeordnet sind, **dadurch gekennzeichnet, dass** die Abgabeeinheiten (23) jeweils einen UV-Sterilisierer (38) enthalten.

2. Verfahren nach Anspruch 1, **dadurch gekennzeichnet, dass** eine Reinigungseinheit (6, 8, 14, 38) ein mechanisches Filter und/oder ein Aktivkohlefilter und/oder einen Ionenaustauscher und/oder einen UV-Sterilisierer und/oder eine Umkehrosmosemembran enthält.

3. Verfahren nach einem der vorangehenden Ansprüche, **dadurch gekennzeichnet, dass** die genannten Abgabeeinheiten (23) und die Haupteinheit (22) zumindest 8 m voneinander entfernt angeordnet sind, vorzugsweise mehr als 40 m.

4. Verfahren nach einem der vorangehenden Ansprüche, **dadurch gekennzeichnet, dass** die Haupteinheit (22) eine Umkehrosmosemembran (14) und/oder ein mechanisches Filter (6) und/oder ein Aktivkohlefilter (8) umfasst.

5. Verfahren nach einem der vorangehenden Ansprüche, **dadurch gekennzeichnet, dass** die Haupteinheit (22) einen Vorratstank (13) zur zeitweiligen Lagerung von gereinigtem Wasser umfasst.

6. Verfahren nach einem der vorangehenden Ansprüche, **dadurch gekennzeichnet, dass** die Abgabeeinheiten (23) zum Füllen eines verschließbaren Behälters mit abgegebener Flüssigkeit eingerichtet sind.

7. Verfahren nach einem der vorangehenden Ansprüche, **dadurch gekennzeichnet, dass** die Abgabeeinheiten (23) zum Füllen einer Tasse mit abgegebener Flüssigkeit eingerichtet sind.

8. Verfahren nach einem der vorangehenden Ansprüche, **dadurch gekennzeichnet, dass** die Abgabeeinheiten (23) zum Füllen einer Tasse und auch eines verschließbaren Behälters mit abgegebener Flüssigkeit eingerichtet sind.

9. Verfahren nach einem der vorangehenden Ansprüche, **dadurch gekennzeichnet, dass** die Abgabeeinheiten (23) einen Wasservorratstank mit einer zumindest teilweise durchsichtigen Wand aufweisen.

10. Verfahren nach einem der vorangehenden Ansprüche, **dadurch gekennzeichnet, dass** zwei Abgabeeinheiten (23) um mehr als 5 m entfernt voneinander angeordnet sind, vorzugsweise mehr als 10 m.

11. Verfahren nach einem der vorangehenden Ansprüche, **dadurch gekennzeichnet, dass** die Haupteinheit (22) und/oder die Abgabeeinheiten (23) Mittel zum Hinzufügen von Kohlensäuregas zu der abzugebenden Flüssigkeit enthalten.

12. Verfahren nach einem der vorangehenden Ansprüche, **dadurch gekennzeichnet, dass** die Haupteinheit (22) und/oder die Abgabeeinheiten (23) Mittel zum Hinzufügen von Mineralstoffen und/oder eines Geschmacksstoffs zu der abzugebenden Flüssigkeit umfassen.

13. Verfahren nach einem der vorangehenden Ansprüche, **dadurch gekennzeichnet, dass** die Haupteinheit (22) und/oder die Abgabeeinheiten (23) Mittel zum Kühlen der abzugebenden Flüssigkeit umfassen.

14. Verfahren nach einem der vorangehenden Ansprüche, **dadurch gekennzeichnet, dass** die Haupteinheit (22) und/oder die Abgabeeinheiten (23) Mittel zum Aufheizen der abzugebenden Flüssigkeit umfassen.

15. Verfahren nach einem der vorangehenden Ansprüche, **dadurch gekennzeichnet, dass** für jede Abgabeeinheit (23) ein Rohr (24), das Wasser von der Haupteinheit (22) zu der Abgabeeinheit (23) transportiert, zwischen der Haupteinheit (22) und der Abgabeeinheit (23) vorgesehen ist, sowie eine Zirkulationsleitung (47), die Wasser von der Abgabeeinheit (23) zu der Haupteinheit (22) transportiert.

16. Verfahren nach Anspruch 15, **dadurch gekennzeichnet, dass** Mittel vorhanden sind, um eine zeitweilige oder kontinuierliche Strömung von gereinigtem Wasser von den Abgabeeinheiten (23) zu der Haupteinheit (22) durch die Zirkulationsleitung (47) zu bewirken, so dass das Wasser zirkuliert wird.

## Revendications

1. Procédé de distribution d'eau purifiée dans un commerce dans lequel des consommateurs remplissent leur contenants de ladite eau issue d'une unité de distribution; dans lequel de l'eau du robinet, livrée par une société de distribution d'eau, est traitée dans une unité principale (22) présente dans ledit commerce, au moyen d'une ou de plusieurs unités de purification (6, 8, 14, 38) avant d'être distribuée; dans lequel plusieurs unités de distribution (23) sont reliées à ladite unité principale (22); dans lequel lesdites unités de distribution (23) et l'unité principale (22) sont disposées à au moins 3 mètres les unes des autres et deux desdites unités de distribution sont éloignées de plus de 2 mètres l'une de l'autre; **caractérisé en ce que** les unités de distribution (23) comportent chacune un stérilisateur UV (38).

2. Procédé selon la revendication 1, **caractérisé en ce qu'**une unité de purification (6, 8, 14, 38) comporte un filtre mécanique et/ou un filtre à charbon actif et/ou un échangeur d'ions et/ou un stérilisateur UV et/ou une membrane d'osmose inverse.

3. Procédé selon l'une des revendications précédentes, **caractérisé en ce que** lesdites unités de distribution (23) ainsi que l'unité principale (22) sont placées à au moins 8 mètres l'une de l'autre et préférentiellement à plus de 40 mètres.

4. Procédé selon l'une des revendications précédentes, **caractérisé en ce que** l'unité principale (22) comporte une membrane d'osmose inverse (14) et/ou un filtre mécanique (6) et/ou un filtre à charbon actif (8).

5. Procédé selon l'une des revendications précédentes, **caractérisé en ce que** l'unité principale (22) comporte une cuve de stockage (13) permettant de stocker provisoirement de l'eau purifiée.

6. Procédé selon l'une des revendications précédentes, **caractérisé en ce que** les unités de distribution (23) sont disposées de façon à remplir un contenant refermable de liquide distribué.

7. Procédé selon l'une des revendications précédentes, **caractérisé en ce que** les unités de distribution (23) sont disposées de façon à remplir un gobelet de liquide distribué.

8. Procédé selon l'une des revendications précédentes, **caractérisé en ce que** les unités de distribution (23) sont disposées de façon à remplir un gobelet ainsi qu'un contenant refermable de liquide distribué.

9. Procédé selon l'une des revendications précédentes, **caractérisé en ce que** les unités de distribution (23) comportent une cuve de stockage avec une paroi au moins partiellement transparente.

10. Procédé selon l'une des revendications précédentes, **caractérisé en ce que** deux unités de distribution (23) sont séparées de plus de 5 mètres et plus préférentiellement de plus de 10 mètres.

11. Procédé selon l'une des revendications précédentes, **caractérisé en ce que** l'unité principale (22) et/ou les unités de distribution (23) comportent des moyens permettant d'ajouter du gaz carbonique au liquide à distribuer.

12. Procédé selon l'une des revendications précédentes, **caractérisé en ce que** l'unité principale (22) et/ou les unités de distribution (23) comportent des moyens permettant d'ajouter des minéraux et/ou un aromatisant au liquide à distribuer.

13. Procédé selon l'une des revendications précédentes, **caractérisé en ce que** l'unité principale (22) et/ou les unités de distribution (23) comportent des moyens permettant de refroidir le liquide à distribuer.

14. Procédé selon l'une des revendications précédentes, **caractérisé en ce que** l'unité principale (22) et/ou les unités de distribution (23) comportent des moyens permettant de réchauffer le liquide configuré pour être distribué.

15. Procédé selon l'une des revendications précédentes, **caractérisé en ce que**, pour chaque unité de distribution (23), un tuyau (24) est présent qui transporte de l'eau issue de l'unité principale (22) vers l'unité de distribution (23) entre l'unité principale (22) et l'unité de distribution (23), ainsi qu'un tuyau de circulation (47) qui transporte l'eau issue de l'unité de distribution (23) vers l'unité principale (22).

16. Procédé selon la revendication 15, **caractérisé en ce que** des moyens sont présents qui permettent de réaliser un débit d'eau purifiée provisoire ou continu issu des unités de distribution (23) vers l'unité principale (22) au travers du tuyau de circulation (47) de façon à faire circuler l'eau.
